(19) Europäisches Patentamt
European Patent Office
Office européen des brevets

(11) **EP 2 516 988 B1**

(12) **EUROPÄISCHE PATENTSCHRIFT**

(45) Veröffentlichungstag und Bekanntmachung des Hinweises auf die Patenterteilung:
**02.04.2014 Patentblatt 2014/14**

(51) Int Cl.:
***G01N 7/10*** *(2006.01)*

(21) Anmeldenummer: **10796013.0**

(22) Anmeldetag: **16.12.2010**

(86) Internationale Anmeldenummer:
**PCT/EP2010/069884**

(87) Internationale Veröffentlichungsnummer:
**WO 2011/076659 (30.06.2011 Gazette 2011/26)**

(54) **VERFAHREN UND VORRICHTUNG ZUR MEMBRANBASIERTEN ANALYSE VON GASKOMPONENTEN**

METHOD AND DEVICE FOR THE MEMBRANE-BASED ANALYSIS OF GAS COMPONENTS

PROCÉDÉ ET DISPOSITIF D'ANALYSE DE COMPOSANTS GAZEUX AU MOYEN DE MEMBRANES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2009 DE 102009060583**

(43) Veröffentlichungstag der Anmeldung:
**31.10.2012 Patentblatt 2012/44**

(73) Patentinhaber: **Membranbasierte Gassensoren UG (haftungsbeschränkt) - MeGaSen 14467 Potsdam (DE)**

(72) Erfinder:
• **LAZIK, Detlef, Dr.**
 **06198 Salzatal (DE)**
• **LAZIK, Dieter, Dr.**
 **14778 Beetzsee (DE)**
• **REHAK, Wolfgang, Dr.**
 **12555 Berlin (DE)**

(74) Vertreter: **Lippert, Stachow & Partner Patentanwälte Krenkelstrasse 3 01309 Dresden (DE)**

(56) Entgegenhaltungen:
**DE-A1- 4 316 196     DE-C1- 10 220 944**

• **LAZIK D ET AL: "A new method for membrane-based gas measurements", SENSORS AND ACTUATORS A, ELSEVIER SEQUOIA S.A., LAUSANNE, CH, Bd. 117, Nr. 2, 14. Januar 2005 (2005-01-14), Seiten 241-251, XP025325174, ISSN: 0924-4247, DOI: 10.1016/J.SNA.2004.06.015 [gefunden am 2005-01-14]**

EP 2 516 988 B1

## Beschreibung

Die Erfindung betrifft ein Verfahren zur Bestimmung von Gaskomponenten in unterschiedlichen Phasen und Phasengemischen eines Untersuchungsraums, in welchen die Gaskomponenten gelöst oder als Gas vorliegen können. Die Erfindung betrifft ebenso Vorrichtungen zur Ausführung des Verfahrens.

Zur qualitativen und quantitativen Bestimmung von Komponenten eines Gases im Untersuchungsraum, das im folgenden als Matrix bezeichnet wird und als eigene Phase und gelöst in anderen Phasen auftreten kann, sind verschiedene Verfahren bekannt, welche die selektive Permeation von Gaskomponenten durch Membranen nutzen. So werden beispielsweise in der DE 43 16 196 A1 ein Verfahren sowie eine Vorrichtung zum qualitativen und quantitativen Nachweis von Partialdrücken eines Gasgemischs mit unspezifischen Drucksensoren beschrieben. Dazu wird das zu analysierende Gasgemisch in seiner Zusammensetzung oder seinem Druck zunächst periodisch moduliert. Nach dem Passieren einer Membran erzeugt das modulierte Gas in einer Messkammer periodische Schwankungen im Totaldruck, deren Phasenlage für jede Gasart charakteristisch ist.

Voraussetzung für die aus praktischen Erwägungen häufig interessante quantitative Analyse der Konzentration ausgewählter, bekannter Gaskomponenten ist die Annahme, dass die Änderung der Matrixzusammensetzung auf Konzentrationsänderungen der untersuchten Gaskomponente zurückzuführen ist.

So beschreibt die DE 199 25 842 A1 ein Verfahren, bei dem die Konzentration oder der Partialdruck einer in einem Fluid enthaltenen Gaskomponente aus der Geschwindigkeit der Druckänderung bestimmt wird.

Entsprechend verschiedener Anwendungsfälle stehen Sensoren unterschiedlicher Geometrie zur Verfügung, die bei minimalem Eingriff in die im Untersuchungsraum ablaufenden Prozesse mit der zu untersuchenden Matrix in Kontakt gebracht werden können. So gestattet eine schlauchförmige Sensorgeometrie die Mittelung der Konzentration entlang der beobachteten Auslagelinie im Untersuchungsraum. Nach der DE 199 25 842 A1 kann eine solche Sensorik inklusive einer geeigneten Referenzsensorik für die in-Situ Messung fest im Untersuchungsobjekt verlegt werden und bedarf keiner weiteren Wartung.

Bei membranbasierten Analyseverfahren steht die verwendete Membran einseitig in Kontakt mit der die Matrix enthaltenden Phasen, während auf deren anderen Seite ein mindestens teilweise von der Membran umschlossener Hohlraum mit einem Gas bekannter Zusammensetzung befüllt ist. Ein Konzentrationsunterschied von Gaskomponenten beidseitig der Membran bewirkt einen diffusiven Stofffluss durch die Membran und führt dadurch auf eine Partialdruckänderung innerhalb des Hohlraumes, die als Druckänderung oder Volumenänderung der Gasphasen im Hohlraum gemessen werden kann.

Der mit geeigneten Sensoren zur Messung von Druck oder Volumen oder einer davon abhängigen Messgröße bestückte, mindestens teilweise durch eine Membran verschlossene Hohlraum wird als Messkammer bezeichnet. Die Messkammer ist mit ihrem Aufbau und verschiedenen Komponenten an das eingesetzte Verfahren angepasst. So kann sie über ein gegebenenfalls regelbares Verschlusssystem und einen Stützkörper zur mechanischen Stabilisierung gegenüber beidseitig der Membran möglichen Unterschieden des Drucks verfügen. Auch eine Radialsymmetrie der Membrangeometrie kann zur Sicherung der Messkammergeometrie genutzt werden, wobei die Messkammer sowohl auf der Innenseite als auch auf der Außenseite der radialsymmetrischen Membran angeordnet sein kann.

Messkammer und Membran bilden einen Messsensor auch einfach als Sensor bezeichnet, der gegebenenfalls mit einem Referenzsensor kombiniert sein kann. Letzterer kann einen zum Messsensor analogen Aufbau aufweisen. Ein Sensor besitzt einen aus den physikalisch relevanten geometrischen Eigenschaften von Messkammer und Membran ableitbaren Geometriefaktor sowie eine membranabhängige Gasselektivität, die bestimmt, wie sich die Permeationskoeffizienten der Membran für die Komponenten des Gases unterscheiden. Dabei wird unter Permeation der Zusammenhang von Lösung und Diffusion einer Gaskomponente in der Membran verstanden. Bislang sind Membranen, die ausschließlich für eine Gaskomponente permeable sind, nicht bekannt. Vielmehr sind verschiedene Membranen durch unterschiedliche Selektivitätsreihenfolgen für die einzelnen Gaskomponenten der Matrix gekennzeichnet.

Die in der DE 102 20 944 A1 beschriebene Messvorrichtung realisiert eine räumliche Trennung zwischen Probennahme mittels eines gasdurchlässigen Probennahmeelements (Phasenscheider), das einseitig mit den Stoffen des zu untersuchenden Raums in Kontakt steht, und der Sensorik. Letztere basiert auf der in der DE 199 25 842 A1 beschriebenen. Sensor und Probennahmeelement wird durch eine gasundurchlässige Ringleitung miteinander verbunden. Das Gas innerhalb der Ringleitung kann permanent oder ereignisausgelöst mittels Pumpe durch Ringleitung, Probennahmeelement und Sensor bewegt werden. Als auslösendes Ereignis dient eine Änderung des Drucks innerhalb des geschlossenen Systems infolge der Gleichgewichtseinstellung der Gaszusammensetzung innerhalb der Messvorrichtung mit der Matrix. Neben der konvektiven Konditionierung der Messkammer über ein Spülgas wird deren diffusive Konditionierung über die durch die Ringleitung zirkulierende Gasphase beschrieben. Zur Erhöhung der Sensitivität werden in einem Differentialgassensor baugleiche Messkammern beidseitig der Membran ausgeführt und das Druck-Zeit-Verhalten zwischen beiden Messkammern anhand des sich zwischen beiden Messkammern einstellenden Differenzdrucks ermittelt.

Der Ausgangszustand vor einer Messung, gekennzeichnet durch eine bekannte Gaszusammensetzung innerhalb der Messkammer und eines definierten Zusammenhangs zwischen diesem Gas und der Matrix, kann konvektiv (DE 199 25 842 A1) durch das Verschlusssystem der Messkammer oder diffusiv durch die Membran (DE 102 20 944 A1) eingestellt sein und wird als Konditionierung bezeichnet.

Die theoretischen Grundlagen, die der DE 199 25 842 A1 und der DE 102 20 944 A1 zugrunde liegen, werden in Lazik et al., Sens. Actuators, A 117 (2005), 241 - 251 erläutert und anhand eines beispielhaften Gasgemischs aus Stickstoff und Sauerstoff exemplarisch dargestellt.

Unter gegebenen Bedingungen bewirkt die Selektivität der Membran in Abhängigkeit der aus dem Gleichgewicht ausgelenkten Gaskomponente unterschiedliche zeitliche Verläufe für die Wiedereinstellung der Gleichgewichte beidseitig der Membran. Dadurch können die gemessenen Druck-Zeit- oder Volumen-Zeit-Verläufe auf die ursächlichen Konzentrationsunterschiede einer oder mehrerer Gaskomponenten zurückgeführt werden. Für gegebene Matrix kann für den verwendeten Sensor diesbezüglich eine komponentenabhängige Kalibration hinterlegt werden.

Verrechnet man die unterschiedlichen Druck-Zeit-Verläufe, die hinter Membranen mit unterschiedlichen Selektivitäten ermittelt wurden, in einem Gleichungssystem und berücksichtigt die bekannte initiale Gaszusammensetzung in den Messkammern, so führt dies auf die theoretisch mögliche, vollständige Analyse der Matrix.

Ist die Matrix komplex zusammengesetzt, bedingt eine solche Analyse aus praktischer Sicht einen hohen instrumentelltechnischen Aufwand. Ferner stehen möglicherweise nicht genügend Membranmaterialien mit hinreichenden Selektivitäten zur Verfügung.

Häufig ist jedoch nicht die Analyse der Matrix, sondern die der Konzentration einer Gaskomponente in der Matrix gefragt. Beispielsweise die Konzentration oder der Partialdruck einer qualitativ bekannten Gaskomponente, die in der Matrix durch Leckage aus einer technischen Anlage auftritt. In einer sonst unveränderten Matrix ist dies nach DE 199 25 842 A1 über nur einen Sensor möglich. Demgemäß sind zwei unterschiedlich selektive Sensoren nötig für den Konzentrationsnachweis für zwei qualitativ bekannte Gaskomponenten, die sich unabhängig voneinander in der Matrix ändern können, usw.

Derartige Gassensoren können in sehr unterschiedlichen Aufgabengebieten zum Einsatz kommen, bei denen sich Konzentrationen der Gaskomponenten ändern. Die Konzentrationsänderungen können verschiedene Ursachen haben, z.B. Stofftransport oder chemische Prozesse. Dementsprechend sind derartige Gassensoren z.B. für das Monitoring von Gaskomponenten in Gewässern, Böden und Gesteinen verwendbar, wo biogeochemische Prozesse zu berücksichtigen sind, oder für die Überwachung und Steuerung technischer Anlagen, Deponien, die Sanierung kontaminierter Standorte, usw.

Insbesondere hinsichtlich klimarelevanter Gase, z.B. des Kohlendioxids ($CO_2$) im Zusammenhang mit der Carbon-Captureand-Storage-Technologie (CCS), sind Monitoringsysteme von Interesse, die repräsentativ und kostengünstig in-Situ zum Einsatz gebracht werden können.

In diesem und gleichermaßen auch in weiteren Anwendungsfällen kann jedoch auch eine Differenzierung einer der Gaskomponenten hinsichtlich deren Herkunft (Genese) erforderlich sein. Am Beispiel des $CO_2$ ist zu unterscheiden, dass $CO_2$ nicht nur aus der technischen oder geotechnischen Anlagen wie z.B. Pipelines, Verpressungsbohrungen oder Speichergestein entweichen kann, sondern auch im relevanten Monitoringraum, z.B. im Bodenkörper durch Stoffwechselprozesse entsteht. Im ersten Fall ist die Quelle extern, im zweiten eine interne Reaktion oder Bodenatmung. Ein Sicherheitssystem sollte für solche Anwendungen in der Lage sein, das $CCS-CO_2$ von $CO_2$ infolge Bodenatmung unterscheiden zu können. Die Überwachung externer Quellen im Monitoringraum Bodenkörper kann auch für aufsteigendes $CO_2$ infolge von Schwelbränden oder infolge vulkanischer Aktivität erforderlich sein.

Für eine so genannte genetische, d.h. herkunftsbezogene Analyse werden bisher aufwendige Methoden eingesetzt die beispielsweise Unterschiede in der Isotopensignatur der verschiedenen Gasquellen nutzen, was mit hohem technischen, finanziellen und personellen Aufwand verbunden ist. Ferner sind die Unterschiede in der Isotopensignatur der Gasquellen unter Umständen nicht hinreichend stark ausgeprägt, nicht zeitlich konstant oder unterliegen auf dem Weg von der Quelle zum Untersuchungsraum einer Veränderung.

Der Erfindung liegt deshalb die Aufgabe zugrunde, ein Verfahren und dazu verwendbare Vorrichtungen anzugeben, die eine quantitative Veränderung der Konzentration einer Gaskomponente mit deren qualitativ eindeutiger Bestimmung in einer gegebenen Matrix ermöglichen und dabei deren genetische Differenzierung gestatten.

Die erfindungsgemäße Lösung der Aufgabe erfolgt über die Analyse des Differenzdruck-Zeit-Verlaufs $\Delta p_s(t)$ zwischen den Messkammern von zwei spezifisch in Geometrie und Selektivität aufeinander abgestimmten Sensoren, die beide gleichermaßen einen durch eine Membran verschlossenen Hohlraum aufweisen und zeitgleich der zu untersuchenden Matrix ausgesetzt sind.

Die Abstimmung von Geometrie und Selektivität des Sensorpaares erfolgt so, dass unter gegebenen Bedingungen differierende zeitliche Verläufe der Permeation der Gaskomponenten für die zu untersuchende Matrix in bzw. aus den Messkammern resultieren.

Die Messung erfolgt aus einem reproduzierbaren Ausgangszustand für die diffusiven Gasflüsse durch die Membranen. Dieser Zustand kann alternativ durch Einstellung von thermodynamischem Gleichgewicht, bei dem bei Abschluss der Konditionierung keine diffusiven Gasflüsse mehr zu verzeichnen sind, oder durch Einstellung von dynamischem Gleichgewicht erreicht werden, bei dem zum Abschluss der Konditionierung stationäre diffusive Gasflüsse vorliegen.

Für die Einstellung des thermodynamischen Gleichgewichts zwischen den Gasen beidseitig der Membran kann ein einfach aufgebautes, passives d.h. diffusionsgespültes Sensorpaar zum Einsatz kommen. Ein derartiges Sensorpaar benötigt keine Vorrichtungen zum Öffnen oder Verschließen der Messkammern. Der Startzeitpunkt $t_A$ der Messung folgt prozessgetrieben nach einer diffusiven Auslenkung aus der Gleichgewichtslage als Folge der Konzentrationsänderung einer Gaskomponente in der Matrix. Er kann durch den Beginn der Änderung des Differenzdrucks zwischen den Messkammern oder den des Drucks in einer der Messkammern definiert werden.

Zur Einstellung des dynamischen Gleichgewichts werden die Messkammern mit einem Gas bekannter Zusammensetzung gespült und nachfolgend verschlossen, wofür aktorische Komponenten wie Ventile zum Öffnen oder Verschließen der Messkammern vorgesehen sind. Während der Konditionierung sind die Messkammern mit einem Spülgasversorgungssystem verbunden. Der Startzeitpunkt $t_A$ der Messung ist hier durch den Zeitpunkt definiert, an dem die Messkammern verschlossen werden, bevorzugt zuzüglich eines festlegbaren Offsets.

Ausgehend vom Gleichgewichtszustand kann der Startzeitpunkt $t_A$ so gewählt werden, dass der Differenzdruck $\Delta p_s$ zwischen den Messkammern bei ungefähr Null liegt. Alternativ sind für beide Verfahrensvarianten auch andere reproduzierbare Zeitpunkte, z.B. von Extremwerten, Wendepunkte, etc. auf den Druck-Zeit-Kurvenverläufen von Differenzdruck oder Messkammerdruck wählbar.

Aufgrund der voneinander abweichenden Permeationsverläufe an beiden Membranen entwickelt sich der weitere Druckverlauf in den Messkammern nach dem Startzeitpunkt $t_A$ unterschiedlich. Die geeignete Sensorkombination führt dazu, dass sich die beiden Druck-Zeit-Kurven fern vom sich für große Zeiten wieder einstellenden Gleichgewichtszustand schneiden, wobei der Differenzdruck$\cdot \Delta p_s$ (t) zum Zeitpunkt t = $t_E$ wiederum den zum Startzeitpunkt angenommenen Wert erreicht hat, z.B. ungefähr Null ist. Dieser Zeitpunkt $t_E$ soll zur Unterscheidung als Endzeitpunkt bezeichnet sein, wobei sich die Bezeichnung "End" lediglich auf den Zeitpunkt bezieht, der zusammen mit dem Startzeitpunkt zur Bestimmung der charakteristischen Zeitdifferenz $\Delta t = t_E - t_A$ herangezogen wird und keinesfalls auf den Ablauf einer Messung bezogen sein soll. Im weiteren Verlauf konvergieren die Druckverläufe für vergleichsweise großen Zeiten mit Wiedereinstellung des Gleichgewichtes gegeneinander.

Analog zur Wahl des Startzeitpunkts $t_A$ kann auch die Wahl des Endzeitpunkts $t_E$ entsprechend des unter den jeweiligen Messbedingungen realisierten Druck-Zeit-Verlaufs anhand eines charakteristischen und reproduzierbaren Zeitpunktes auf diesem Verlauf spezifiziert werden.

Nun wurde gefunden, dass die Zeitdifferenz $\Delta t = t_E - t_A$ für gegebene Messbedingungen und Matrix charakteristisch für die Gaskomponente ist, deren Konzentration sich in der Matrix verändert hat, dies jedoch unabhängig vom Maß der Änderung, da die Zeitdifferenz $\Delta t$ vollständig über dem theoretisch möglichen Mischungsbereich konstant ist.

Für die konkrete Verfahrensausführung wurde festgestellt, dass die genannten charakteristischen Zeitpunkte des Differenzdrucks ihre Eigenschaften unabhängig von der Verfahrensführung beibehalten. Dies ermöglicht sowohl eine prozessgetriebene und damit ereignisorientierte Reaktion des Messsystems, der die nicht stationäre Gasdiffusion aus der Störung des thermodynamischen Gleichgewichts zugrunde liegt, als auch eine beobachtergetriebene Arbeitsweise beispielsweise unter Nutzung des dynamischen Gleichgewichts als Ausgangpunkt der Messung.

Überraschender Weise wurde weiter festgestellt, dass auch eine in der Matrix ablaufende Reaktion, infolge derer sich die Konzentrationen von zwei Gaskomponenten in einem über die Reaktion definierten Zusammenhang verändern, durch eine ebenso charakteristische Zeitdifferenz $\Delta t_0$, der Reaktions-Matrixzeit, identifizierbar ist, die sich wiederum von der Zeitdifferenz $\Delta t_{mix}$, die aus der reinen Änderung einer der beteiligten Gaskomponenten resultiert und auch Mischungs-Matrixzeit genannt wird, unterscheidet. So weisen äquimolare Reaktionen zwischen zwei Gaskomponenten A und B der Matrix, z.B. der Umsatz von A zu B, wiederum eine Unabhängigkeit der Zeitdifferenz $\Delta t_0$ von der Konzentration und damit z.B. eine Unabhängigkeit von der Intensität der Reaktion auf. Am oben dargestellten Beispiel der Bodenatmung wäre Komponente A Sauerstoff und Komponente B Kohlendioxid.

Bewirkt nun neben dieser internen Reaktion, bei der nur A und B beeinflusst wird, ein weiterer Prozess die Einmischung von A oder B aus einer externen Quelle in die Matrix, so verändert die eingemischte Gaskomponente die Partialdrücke aller in der Matrix bereits vorhandenen Gaskomponenten. Letzterer Mischungsprozess entspricht der bereits oben dargestellten Änderung der Konzentration einer Gaskomponente in der Matrix. Erhöht sich der relative, auf die Gesamtkonzentration bezogene Anteil der zugemischten Gaskomponente, so verschiebt sich die messbare Zeitdifferenz $\Delta t$ von der die Reaktion charakterisierenden hin zu jener für den reinen Mischungsprozess der Gaskomponente mit der Matrix. Es sei an dieser Stelle präzisiert, dass die Bezeichnung $\Delta t$ ohne einen Zusatz immer dann verwendet wird, wenn die Zeitdifferenz sowohl von einer Reaktion von mindestens zwei Gaskomponenten in der Matrix als auch von der Einmischung mindestens einer Komponente in die Matrix bestimmt werden kann.

Unter gegebenen Messbedingungen für eine anfangs vorhandene Matrixzusammensetzung wird z.B.

die Verschiebung der Zeitdifferenz $\Delta t$ ausgehend von einer Konstante, z.B. die einer äquimolaren Reaktion, nur durch die Mischungsintensität der aus einer externen Quelle stammenden Gaskomponente bestimmt.

Die Zeitdifferenz $\Delta t$ an sich und deren Änderung ist damit ein von einer intern ablaufenden, unterschiedlich intensiven Reaktion unabhängiges Maß zur genetischen Differenzierung zwischen den Anteilen der Gaskomponente aus Reaktion und Mischung. Es ist durch mathematische Simulation ermittelbar, experimentell bestimmbar und kann zur Kalibration der Messung hinterlegt werden.

Die Geometrie und Selektivität des Sensorpaars ist in Abhängigkeit von verschiedenen Parametern wählbar. Insbesondere die Komponenten der Matrix haben Einfluss auf die Materialwahl. Aber auch Größe und Beschaffenheit des Untersuchungsraums und die aufzulösende Dynamik der darin ablaufenden Prozesse bestimmen die Eigenschaften der Sensorik. Ferner können physikalische oder chemische Umgebungsbedingungen gewisse Sensoreigenschaften erfordern. Hierfür steht eine breite Palette unterschiedlichster Membran- und Messkammermaterialien zur Verfügung.

Entsprechend einer Ausgestaltung der Erfindung umfasst die Messvorrichtung neben dem Sensorpaar, welches der Matrix ausgesetzt ist, ein weiteres, vorteilhafter Weise baugleiches Sensorpaar als Referenz. Diese Referenz wird jedoch beidseitig der Membran dem gleichen Gas ausgesetzt. Auch in der Referenz wird die zeitliche Entwicklung des Differenzdrucks $\Delta p_r(t)$ ermittelt, so dass der zeitliche Verlauf von verfahrens- und umgebungsbedingten Einflüssen auf das Messsystem abgebildet werden kann. Dieser zeitliche Verlauf des Referenzdifferenzdrucks $\Delta p_r(t)$ wird nachfolgend als Basislinie bezeichnet. Indem der Differenzdruck $\Delta p_s$ des Sensorpaars auf jenen der Referenz bezogen wird, können Verfahrens- und Umgebungseinflüsse aus der Bestimmung von $\Delta t_0$, $\Delta t_{mix}$ und $\Delta t$ eliminiert werden.

Das Erreichen der Zeitpunkte $t_A$ und $t_E$ erfolgt gemäß obiger Beschreibung wegen der abgeschlossenen Volumina der Messkammern isochor. Alternativ können die Zeitpunkte $t_A$ und $t_E$ in analoger Weise isobar durch Messung des Differenzvolumens und Wiedereinstellung eines definierten Volumens oder Volumenstroms für das Sensor- und das Referenzsensorpaar definiert werden. Mit der Ermittlung der charakteristischen Zeitpunkte und Zeitdifferenzen aus dieser Messung kann auch die beschriebene Auswertung für die isobare Verfahrensführung analog verwendet werden.

Als Spülgas und zur Kalibration des eingebauten Sensorsystems kommen unterschiedlich zusammengesetzte Spülgase in Abhängigkeit der Matrix und der zu untersuchenden Gaskomponenten zum Einsatz.

Die Erfindung soll nachfolgend anhand eines Ausführungsbeispieles näher erläutert werden. In der zugehörigen Zeichnung zeigt:

Fig. 1    eine Messvorrichtung mit einem Paar schlauchförmiger Sensoren,

Fig. 2    eine Messvorrichtung mit referenzbasierten Sensoren,

Fig. 3    den Verlauf des Differenzdrucks $\Delta p_s(t)$ für zwei unterschiedliche Gase über der durch Referenzmessung bestimmten Basislinie, gemessen aus dem dynamischen Gleichgewicht heraus,

Fig. 4    die Konzentrationsunabhängigkeit unterscheidbarer Zeitdifferenzen $\Delta t$ für die der Matrix zugemischten bzw. in Folge interne Reaktion in der Matrix entstandenen Gaskomponente, bestimmt durch Messung aus dem thermodynamischen Gleichgewicht heraus.

Das Messverfahren und auch das dazu verwendete Messsystem sind anhand von zwei gekoppelten Sensoren beschrieben. Verfahren und System sind jedoch auch auf mehrere Sensoren mit unterschiedlichen Eigenschaften anwendbar, die in analoger Art gekoppelt und betrieben werden.

Die Beschreibung der Erfindung erfolgt ohne Beschränkung der Allgemeingültigkeit für den Anwendungsfall der Gasanalyse im wasserungesättigten Bodenkörper. Die Matrix liegt hier gasförmig im Druckgleichgewicht zur Atmosphäre, gelöst im Bodenwasser und ad- bzw. absorbiert am und im Feststoff vor. Der Einfachheit halber seien lokale Lösungs- und Sorptionsgleichgewichte für die Gaskomponenten der Matrix zwischen den unterschiedlichen Phasen angenommen.

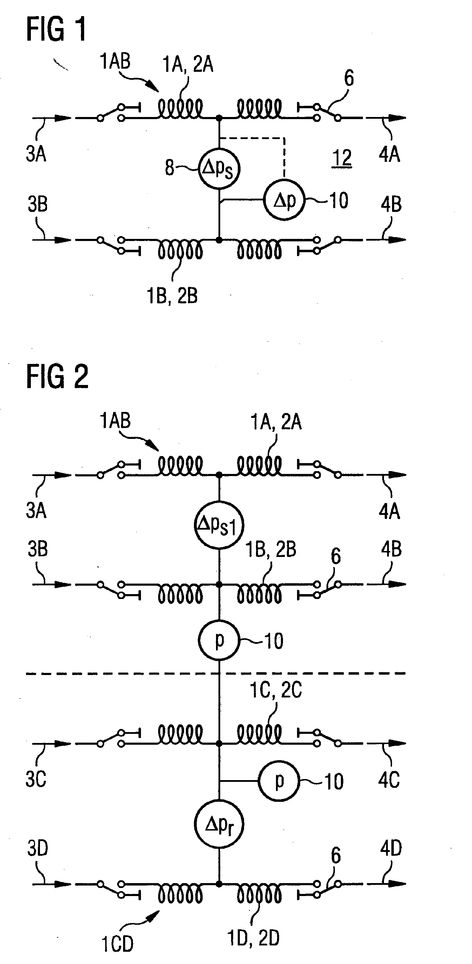

Fig. 1 stellt den prinzipiellen Aufbau einer Messvorrichtung dar, die zur qualitativen und quantitativen Einzelgasanalyse und zur genetischen Gasdifferenzierung von Gaskomponenten einer Matrix 12 verwendbar ist.

Die Messvorrichtung umfasst zwei Sensoren 1A, 1B, die im dargestellten Ausführungsbeispiel schlauchförmig ausgebildet sind, aber auch andere Formen aufweisen können. Beide Sensoren 1A, 1B sind zeitgleich und benachbart zueinander in dem zu untersuchenden Gasgemisch, d.h. in der Matrix 12 angeordnet, so dass beide Membranen des Sensorpaars 1AB vollständig von der Matrix 12 umgeben sind.

Ein Sensor 1A, 1B wird grundsätzlich von einem Hohlkörper mit einem Messkammervolumen V1, V2 gebildet, dessen Wandung vollständig, wie in der dargestellten Schlauchform oder zumindest abschnittsweise von einer gasdurchlässigen Membran 2A, 2B gebildet ist.

Beide schlauchförmige Sensoren 1A, 1B weisen an einem Ende einen Spülgaszufluss 3A, 3B sowie am anderen Ende jeweils einen Spülgasabfluss 4A, 4B auf. Spülgaszu- und Spülgasabflüsse 3A, 3B, 4A, 4B sind mittels Ventilen 6 verschließbar.

Der Differenzdruck $\Delta p_s$, der sich zwischen den beiden Sensoren 1A, 1B einstellt, wird mittels eines Differenzdrucksensors 8 gemessen. Ergänzend wird in zumindest einem der Sensoren 1A, 1B (gestrichelte Linie) der Druck mittels eines Drucksensors 10 gemessen, bevorzugt eines Relativdrucksensors.

Eine solche oder vergleichbare Messvorrichtungen ermöglichen mit unten beschriebenen Verfahrensausgestaltungen infolge der Reduzierung auf diffusive Prozesse eine vernachlässigbare Wechselwirkung zwischen Monitoringumgebung und Sensor. Sie gestatten den verlorenen Sensoreinbau in den Untersuchungsraum und eine sichere Trennung zwischen Untersuchungs- und Bedienungsraum, die nur diffusiv durch die vorhandenen Gase überwunden wird. Ferner erfolgen nötige Arbeiten wie Reinigung, Funktionstest, Kalibration an der z.B. im Boden verlegten Sensorik nur aus dem Messkammerninneren heraus.

Ein Verfahren zur Einzelgasanalyse, welches die Einstellung des dynamischen Gleichgewichts zum Startzeitpunkt $t_A$ nutzt und nachfolgend als aktive Messung bezeichnet ist, umfasst folgende Verfahrensschritte:

- Zunächst erfolgt eine konvektive Konditionierung der Messeinrichtung, indem beide Sensoren 1A, 1B bei geöffneten Ventilen 6 von einem Spülgas, im Ausführungsbeispiel Luft, durchflossen werden. Im Ergebnis dieser Konditionierung sind beide Membranen des Sensorpaars 1AB jeweils außenseitig der zu untersuchenden Matrix 12 und innenseitig dem Spülgas ausgesetzt.

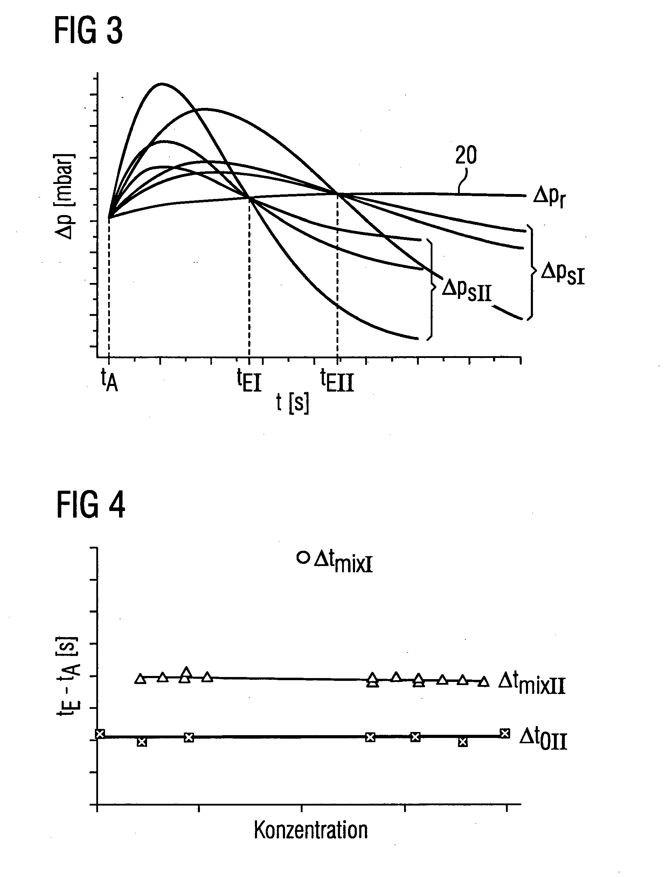

- Zum Zeitpunkt $t_A$ wird das Sensorpaar 1AB mittels der Ventile 6 verschlossen, so dass der Differenzdruck $\Delta p_s$ zum Startzeitpunkt $t_A$ Null beträgt. Mit Verschluss der Sensoren 1A, 1B wird die Messung gestartet. Von dem Startzeitpunkt $t_A$ an wird mittels des Differenzdrucksensors 8 der zeitliche Verlauf des Differenzdrucks $\Delta p_s$ (Fig. 3) und mittels des Drucksensors 10 der zeitliche Verlauf des Drucks $p_B$ in dem Sensor 1B gemessen.

- Aus dem aufgenommenen Zeitverlauf $\Delta p_s(t)$ wird der Zeitpunkt $t_E$ ermittelt, zu dem der Differenzdruck $\Delta p_s$ des.Sensorpaars, das der Matrix 12 ausgesetzt ist, denselben Wert angenommen hat wie der Differenzdruck $\Delta p_r$ der Referenzmessung. Dieser Endzeitpunkt $t_E$ stellt den Druckausgleich zwischen den beiden Membranen des Sensorpaars 1AB dar. Mit Kenntnis von $t_E$ kann die charakteristische Zeitdifferenz $\Delta t = t_E - t_A$ ermittelt werden.

- Aus dem Vergleich mit Referenzzeitverläufen, durch mathematische Simulation oder durch eine Kalibrierung des Messsystems bezogen auf die interessierenden Gaskomponenten ist anhand der ermittelten charakteristischen Zeitdifferenz $\Delta t = t_E - t_A$ (Fig. 4) der gesuchte Typus der Gaskomponente der Matrix 12 zu ermitteln. Anhand derselben charakteristischen Zeitdifferenz $\Delta t$ kann, unter Berücksichtigung der für den Typus bekannten unterschiedlichen Reaktions- und Mischungs-Matrixzeiten $\Delta t_0$ und $\Delta t_{mix}$ (Fig. 4) auf die Genese der Gaskomponente geschlossen werden.

Ergänzend zu dem beschriebenen Verfahrensverlauf kann aus der zeitabhängigen Druckmessung mit dem Drucksensor 10 oder aus dem Druck-Zeit-Verlauf des Differenzdrucks $\Delta p_s(t)$ für die qualitativ bestimmte Gaskomponente die Konzentration und deren Änderung quantitativ ermittelt werden. Zur Ausführung des Verfahrens wird auf die DE 199 25 842 A1 verwiesen, auf die ausdrücklich Bezug genommen wird. Bei der Kombination der qualitativen mit der quantitativen Analyse können die Unterschiede der Druck-Zeit-Verläufe aus der qualitativen Analyse effizient zur Erweiterung der Messbereiche dienen, indem eine komponentenabhängige Kalibration zur Ermittlung der Konzentration hinterlegt wird.

Um solche Eigenschaften der Sensoren und solche lokalen, physikalisch relevanten Eigenschaften der Messumgebung für die Bestimmung der Zeitdifferenz $\Delta t = t_E - t_A$ zu berücksichtigen, deren Unterschiede zwischen den beiden Sensoren einen Einfluss auf die Druckdifferenz $\Delta p_s(t)$ haben, kann die Messsequenz der oben dargestellten Schritte 1 und 2 in einem Referenzmesssystem durchgeführt werden, in welchem die Sensoren von dem innerhalb der Kammern verwendeten Spülgas umgeben sind. Damit wird eine so genannte Basislinie 20 (Fig. 3) ermittelt, die alternativ zur Ermittlung des Endzeitpunktes $t_E$ verwendet wird, indem $t_E$ als der Zeitpunkt definiert wird, zu dem der Differenzdruck $\Delta p_s$ die Basislinie 20 durchläuft anstelle der Abszisse des $\Delta p$-t-Diagramms. Der Differenzdruck, der im Referenzmesssystem ermittelt wird, soll als Referenzdifferenzdruck $\Delta p_r$ bezeichnet sein.

Fig. 2 stellt eine Messvorrichtung dar, in der eine Korrektur der Drift des Differenzdrucksignals $\Delta p_s$ durch Bezug auf den Referenzdifferenzdruck $\Delta p_r$ messtechnisch umgesetzt ist. Ein zum Sensorpaar 1AB, wie zu Figur 1 beschrieben, baugleiches Referenzsensorpaar 1CD wird als Referenz verwendet, indem dessen Membranen 2C, 2D beidseitig dem Spülgas ausgesetzt sind. Sensoren, Membranen, Spülgaszu- und Spülgasabflüsse des Referenzsystems sind mit C und D gekennzeichnet.

Der Differenzdruck $\Delta p_s$ wird in der Ausgestaltung gemäß Fig. 2 unter Berücksichtigung des Referenzdifferenzdrucks $\Delta p_r$ ermittelt, der im Referenzsystem zwischen dessen beiden Sensoren 1C, 1D gemessen wird. Er ergibt sich aus folgender Berechnung:

$$\Delta p_s := \Delta p_{s1} - \Delta p_r,$$

wobei $\Delta p_{s1}$ hier der Differenzdruck ist, welcher zwischen den beiden der Matrix 12 ausgesetzten Sensoren 1A, 1B tatsächlich gemessen wird. Aus dem so ermittelten $\Delta p_s$ kann wie oben zu Fig. 1 beschrieben, der Endzeitpunkt $t_E$, die Zeitdifferenz $\Delta t = t_E - t_A$ sowie die Reaktions- und die Mischungs-Matrixzeit $\Delta t_0$ und $\Delta t_{mix}$ ermittelt werden. Diese wiederum können der Bestimmung der bezüglich des Spülgases konzentrationsveränderten Gaskomponente bzw. Gaskomponenten und deren Herkunft zugrunde gelegt werden.

In der Messvorrichtung gemäß Fig. 2 wird die Druckmessung, welche der Bestimmung der Konzentrationsänderungen aus dem Druck-Zeit-Verhalten dient, auch auf das Referenzsystem bezogen, indem der Drucksensor 10 als Differenzdrucksensor zwischen einem Sensor 1B des Messsystems als auch einem Sensor 1C des Referenzsystems geschalten wird. Ergänzend können mittels dem in DE 199 25 842 A1 beschriebenen Verfahren, auf das hier Bezug genommen wird, auch absolute Konzentrationen der analysierten Gaskomponente durch Messung und Auswertung des Spülgasdrucks mittels eines weiteren, für die Differenzdruckmessung geeigneten Drucksensors 10 erfolgen.

Für die Analyse z.B. von weiteren Gaskomponenten kann ein Messsystem gemäß Fig. 1 oder Fig. 2 durch weitere baugleiche Module mit entsprechend abweichend konfigurierten Membransets ergänzt werden, so dass die Messungen und Auswertungen für jedes Membranset wie oben beschrieben erfolgen.

Bei einer Variante der oben beschriebenen Messverfahren, die als passive Messung bezeichnet sein soll und das thermodynamische anstelle des dynamischen Gleichgewichts nutzt, erfolgt im Verfahrensschritt 1 eine diffusionsgestützte Spülung des Sensorpaares 1AB. In der passiven Messung dient folglich die Matrix 12 als Spülgas, indem die spontan ablaufenden Diffusionsvorgänge für die Spülung genutzt werden, nachdem das Sensorpaar 1AB einem Referenzzustand mit Luft oder der Matrix 12 ausgesetzt wurden. Die Konditionierung des Membransets erfolgt somit fortlaufend diffusiv, wobei die Messkammern permanent geschlossen sind. Die weiteren Verfahrensschritte sind wie oben beschrieben anzuwenden, da wie oben bereits dargelegt die charakteristischen Werte $\Delta t_0$ und $\Delta t_{mix}$, aus denen die Gaskomponenten und deren Genese ermittelt werden, gasspezifisch sind. Folglich können auch solche nicht stationären Messungen für die Einzelgasanalyse und die genetische Gasdifferenzierung verwendet werden.

Fig. 3 stellt verschiedene Zeitabläufe des Differenzdrucks $\Delta p_{sI}$ bzw. $\Delta p_{sII}$ und $\Delta p_r$ dar, ersteres für eine erste Gaskomponente I und eine zweite Gaskomponente II, vorliegend Sauerstoff und Kohlendioxid, jeweils für verschiedene Konzentrationen als Parameter. Es ist ersichtlich, dass unterschiedliche Konzentrationen der betreffenden Gaskomponente I und II zwar den Kurvenverlauf ändern, nicht jedoch die Endzeitpunkte $t_{EI}$ und $t_{EII}$. Es ist auch ersichtlich, dass sich die Endzeitpunkte $t_{EI}$

und $t_{EII}$ der beiden Gase für eine Differenzierung hinreichend unterscheiden. Im dargestellten Analyseverfahren werden die Endzeitpunkte $t_{EI}$ und $t_{EII}$ aus dem Schnittpunkt des jeweiligen Zeitverlaufs mit der Basislinie 20 bestimmt. Letztere stellt wie oben beschrieben den Zeitverlauf des Referenzdifferenzdrucks $\Delta p_r$ dar, der zwischen den beiden Sensoren eines Referenzsystems ermittelt wurde.

In Fig. 4 sind im passiven Verfahren ermittelte Zeitdifferenzen $\Delta t = t_E - t_A$ über der Konzentration der Gaskomponenten dargestellt, die bei der Zumischung von zwei verschiedenen Gasen I und II, wiederum beispielhaft Sauerstoff und Kohlendioxid, zu einer Matrix 12 realisiert wurden. Für jedes der von außen zugegebenen Gase I und II stellt sich eine Mischungs-Matrixzeit $\Delta t_{mixI}$ und $\Delta t_{mixII}$ ein, sofern es nicht zu einer zusätzlichen Reaktion der Gaskomponenten mit der Matrix 12 kommt. Beide Werte stimmen mit den zuvor für beide Gase durch Simulation ermittelten Werten überein und sind, wie an Gas II exemplarisch gezeigt, unabhängig von der Konzentration.

Abweichend von diesen Zeitdifferenzen stellt sich trotz gleicher analysierter Gaskomponenten ein anderer Wert der Zeitdifferenz $\Delta t = t_E - t_A$ für den Fall ein, bei welchem ein Teil einer Gaskomponente, im hier beschriebenen Beispiel Sauerstoff, in der Matrix 12, in diesem Fall sauerstoffangereicherte Luft, zu Kohlendioxid reagiert. Auch hier sind Konzentrationsänderungen der Gaskomponenten Sauerstoff und Kohlendioxid bei der Messung zu verzeichnen. Die oben unter Punkt 4 beschriebene Auswertung ergibt jedoch, dass die ermittelte, abweichende Zeitdifferenz $\Delta t = t_E - t_A$ eine abweichende Genese (Reaktion) der untersuchten Gaskomponente belegt. Durch Vergleich von $\Delta t$ mit den Werten von $\Delta t_{0II}$ und $\Delta t_{mixII}$, die für die in Betracht kommenden Gase bekannt sind, wird der Anteil von Mischung und Reaktion (die genetische Zusammensetzung) der untersuchten Gaskomponente ermittelt.

**Bezugszeichenliste**

| | |
|---|---|
| 1A, 1B, 1C, | Sensor |
| 1AB | Sensorpaar |
| 1CD | Referenzsensorpaar |
| 2A, 2B, 2C, | Membran, |
| 3A, 3B, 3C, | Spülgaszufluss |
| 4A, 4B, 4C, | Spülgasabfluss |
| 6 | Ventil |
| 8 | Differenzdrucksensor |
| 10 | Drucksensor |
| 12 | Matrix |
| 20 | Basislinie |
| V1, V2, V3, | Messkammervolumen |
| $\Delta p_s$ | Differenzdruck |
| $\Delta p_r$ | Referenzdifferenzdruck |
| $t_A$ | Startzeitpunkt |

| $t_E$ | Endzeitpunkt |
| $\Delta t_0$ | Reaktions-Matrixzeit |
| $\Delta t_{mix}$ | Mischungs-Matrixzeit |

**Patentansprüche**

1. Verfahren zur Analyse von Gaskomponenten eines Gasgemischs, nachfolgend als Matrix (12) bezeichnet, mit zwei Sensoren (1A, 1B, 1C ...), die jeweils einen durch eine Membran (2A, 2B, 2C, ...) verschlossenen Hohlraum umfassen, wobei beide Membranen (2A, 2B, 2C, ...) jeweils einseitig der Matrix (12) und mit ihrer anderen Seite einem Spülgas ausgesetzt sind, indem zunächst zu einem Startzeitpunkt $t_A$ ein Ausgangszustand des Messsystems definiert wird, bei welchem es sich in einem diffusiven Gleichgewichtszustand befindet, und nachfolgend ab dem Startzeitpunkt $t_A$ der zeitliche Verlauf des Differenzdrucks $\Delta p_s$ gemessen wird, der sich zwischen den beiden Hohlräumen infolge der Permeation von Gaskomponenten der Matrix (12) durch beide Membranen (2A, 2B, 2C, ...) einstellt, **dadurch gekennzeichnet, dass** die Sensoren (1A, 1B ...) oder die beiden Membranen (2A, 2B, 2C, ...) des Sensorpaars (1AB) unterschiedliche zeitliche Abläufe der Permeation für besagte Gaskomponenten aufweisen, dass ein Endzeitpunkt $t_E$ bestimmt wird, an dem der gemessene Differenzdruck dem zum Startzeitpunkt $t_A$ gemessenen Differenzdruck entspricht und dass aus der Zeitdifferenz $\Delta t = t_E - t_A$ besagte permeierende Gaskomponente bestimmt wird.

2. Verfahren nach Anspruch 1, **dadurch gekennzeichnet, dass** aus der Zeitdifferenz $\Delta t = t_E - t_A$ die Genese besagter Gaskomponente bestimmt wird.

3. Verfahren nach einem der vorstehenden Ansprüche, **dadurch gekennzeichnet, dass** ein Differenzdruck $\Delta p_s$ bezogen auf ein Referenzsensorpaar (1CD) ermittelt wird, indem ein Differenzdruck $\Delta p_{s1}$ des Sensorpaars (1AB) und ein Differenzdruck $\Delta p_r$ des Referenzsensorpaars (1CD), dessen Membranen (2C, 2D) beidseitig dem gleichen Spülgas ausgesetzt sind, ermittelt und der Differenzdruck $\Delta p_s$ aus der Differenz von $\Delta p_{s1}$ und $\Delta p_r$ ermittelt wird.

4. Verfahren nach einem der vorstehenden Ansprüche, **dadurch gekennzeichnet , dass** mit einem Referenzsensorpaar (1CD), dessen Membranen (2C, 2D) beidseitig dem Spülgas ausgesetzt werden, der zeitliche Verlauf eines Referenzdifferenzdrucks $\Delta p_r$, als Basislinie (20) bezeichnet, gemessen und der Endzeitpunkt $t_E$ als der Schnittpunkt des zeitlichen Verlaufs des Differenzdrucks $\Delta p_s$ mit der Basislinie (20) ermittelt wird.

5. Verfahren nach einem der vorstehenden Ansprüche, **dadurch gekennzeichnet, dass** entweder ein dynamisches diffusives Gleichgewicht eingestellt wird, indem eine Spülung über Spülgaszu- und Spülgasabflüsse (3A, 3B, 3C, ... 4A, 4B, 4C, ...) der Sensoren (1A, 1B, 1C ...) erfolgt, wobei das Spülgas ein Gas bekannter Zusammensetzung ist, oder ein thermodynamisches diffusives Gleichgewicht, indem eine Spülung diffusiv durch die Membran (2A, 2B, 2C, ...) erfolgt, wobei das Spülgas das Gas der Matrix (12) ist.

6. Verfahren nach einem der vorstehenden Ansprüche, **dadurch gekennzeichnet, dass** anstelle des Differenzdrucks $\Delta p$ das Differenzvolumen $\Delta V$ zeitabhängig gemessen wird, das sich zwischen den beiden Hohlräumen des Sensorpaars (1AB) bzw. des Referenzsensorpaars (1CD) infolge der Permeation von Gaskomponenten der Matrix (12) durch beide Membranen (2A, 2B, 2C, ...) einstellt.

7. Verfahren nach einem der vorstehenden Ansprüche, **dadurch gekennzeichnet, dass** aus dem Druck-Zeit-Verlauf des Differenzdrucks $\Delta p_s(t)$ oder aus dem Volumen-Zeit-Verlauf des Differenzvolumens für die qualitativ bestimmte Gaskomponente die Konzentration und/oder deren Änderung quantitativ ermittelt werden.

8. Vorrichtung zur Analyse von Gaskomponenten eines Gasgemischs, nachfolgend als Matrix (12) bezeichnet, Zur Durch führung das Verfahren nach, einem der vorstehenden Ansprüche mit zwei Sensoren (1A, 1B, 1C ...) eines Sensorpaares (1AB), die jeweils einen durch eine Membran (2A, 2B, 2C, ...) zumindest teilweise verschlossenen Hohlraum umfassen, und mit einer Druckmesseinrichtung zur zeitabhängigen Messung eines Differenzdrucks $\Delta p_s$, der sich zwischen den beiden Hohlräumen infolge der Permeation von Gaskomponenten aus Matrix (12) und Spülgas durch beide Membranen (2A, 2B, 2C, ...) einstellt oder mit einer Volumenmesseinrichtung zur zeitabhängigen Messung eines Differenzvolumens, das sich zwischen den beiden Hohlräumen infolge der Permeation von Gaskomponenten aus Matrix (12) und Spülgas durch beide Membranen (2A, 2B, 2C, ...) einstellt, **dadurch gekennzeichnet, dass** die Sensoren (1A, 1B ...) oder beide Membranen (2A, 2B, 2C, ...) des Sensorpaars (1AB) in ihrer Geometrie und Selektivität derart aufeinander abgestimmt sind, dass sie differierende zeitliche Verläufe der Permeation für besagte Gaskomponenten der Matrix (12) aufweisen.

9. Vorrichtung nach Anspruch 8, **dadurch gekennzeichnet, dass** sich die Sensoren (1A, 1B, 1C, ...) des Sensorpaars (1AB, 1CD, ...) oder dessen Membranen (2A, 2B, ...) in ihrer Geometrie unterscheiden.

10. Vorrichtung nach Anspruch 8 oder 9, **dadurch gekennzeichnet, dass** sich die Membranen (2A, 2B, 2C, ...) des Sensorpaars (1AB) in ihrem Material unterscheiden.

11. Vorrichtung nach einem der Ansprüche 8 bis 10, **dadurch gekennzeichnet, dass** die Sensoren (1A, 1B) des Sensorpaars (1AB) schlauchförmig ausgebildet und derart der Matrix aussetzbar sind, dass deren Membranen (2A, 2B) vollständig von der Matrix (12) umgeben sind.

12. Vorrichtung nach einem der Ansprüche 8 bis 11, **dadurch gekennzeichnet, dass** die Vorrichtung ein weiteres baugleiches Sensorpaar (1AB) aufweist, dessen Permeationseigenschaften von dem des ersten Sensorpaars (1AB) abweichen.

13. Vorrichtung nach einem der Ansprüche 8 bis 12, **dadurch gekennzeichnet, dass** die Vorrichtung ein baugleiches Referenzsensorpaar (1CD) aufweist, dessen Permeationseigenschaften dem des Sensorpaars (1AB) entspricht, mit einer Druckmesseinrichtung zur zeitabhängigen Messung eines Referenzdifferenzdrucks $\Delta p_r$, der sich zwischen den beiden Hohlräumen des Referenzsensorpaars (1CD) im Verlauf einer Analysemessung einstellt oder mit einer Volumenmesseinrichtung zur zeitabhängigen Messung eines Referenzdifferenzvolumens, das sich zwischen den beiden Hohlräumen des Referenzsensorpaars (1CD) im Verlauf einer Analysemessung einstellt.

14. Vorrichtung nach einem der Ansprüche 8 bis 13, **dadurch gekennzeichnet, dass** sie eine Mehrzahl von Sensorpaaren und Referenzsensorpaaren enthält, die jeweils paarweise in ihren Permeationseigenschaften und in ihren geometrischen Eigenschaften aufeinander abgestimmt sind.

**Claims**

1. Method for the analysis of gas components of a gas mixture, denoted below as matrix (12), having two sensors (1A, 1B, 1C ...) which respectively comprise a cavity sealed by a membrane (2A, 2B, 2C, ...), the two membranes (2A, 2B, 2C, ...) respectively being exposed on one side to the matrix (12) and on the other side to a purge gas, in that at a starting time $t_A$ an initial state of the measurement system is firstly defined in which it is in a diffusive state of equilibrium and, starting from the starting time $t_A$, the time profile of the differential pressure $\Delta p_s$, which is set up between the two cavities as a result of the permeation of gas components of the matrix (12) through the two membranes (2A, 2B, 2C, ...), is subsequently measured, **characterized in that** the sensors (1A, 1B ...) or the two membranes (2A, 2B, 2C, ...) of the sensor pair (1AB) have different temporal cycles of the permeation for said gas components, **in that** an end point $t_E$ is determined at which the measured differential pressure corresponds to the differential pressure measured at the starting time $t_A$, and **in that** said permeating gas component is determined from the time difference $\Delta t = t_E - t_A$.

2. Method according to Claim 1, **characterized in that** the genesis of said gas component is determined from the time difference $\Delta t = t_E - t_A$.

3. Method according to one of the preceding claims, **characterized in that** a differential pressure $\Delta p_s$ is determined by referring to a pair of reference sensors (1CD) **in that** a differential pressure $\Delta p_{s1}$ of the pair of sensors (1AB) and a differential pressure $\Delta p_r$ of the pair of reference sensors (1CD), whose membranes (2C, 2D) are exposed on both sides to the same purge gas, are determined and the differential pressure $\Delta p_s$ is determined from the difference between $\Delta p_{s1}$ and $\Delta p_r$.

4. Method according to one of the preceding claims, **characterized in that**, with the aid of a pair of reference sensors (1CD) whose membranes (2C, 2D) are exposed on both sides to the purge gas, the time profile of a reference differential pressure $\Delta p_r$, denoted as baseline (20), is measured, and the end time $t_E$ is determined as the section of the time profile of the differential pressure $\Delta p_s$ with the baseline (20).

5. Method according to one of the preceding claims, **characterized in that** either a dynamic diffusive equilibrium is set up **in that** purging is performed via purge gas inlets and purge gas outlets (3A, 3B, 3C, ..., 4A, 4B, 4C, ...) of the sensors (1A, 1B, 1C ...), the purge gas being a gas of known composition, or a thermodynamic diffusive equilibrium is set up **in that** purging is performed diffusively through the membrane (2A, 2B, 2C, ...), the purge gas being the gas of the matrix (12).

6. Method according to one of the preceding claims, **characterized in that**, instead of the differential pressure $\Delta p$, what is measured, in a time-dependent manner, is the differential volume $\Delta V$ which is set up between the two cavities of the pair of sensors (1AB), or of the pair of reference sensors (1CD), as a result of the permeation of gas components of the matrix (12) through the two membranes (2A, 2B, 2C, ...).

7. Method according to one of the preceding claims, **characterized in that** the concentration and/or the change therein are/is determined quantitatively from the pressure/time profile of the differential pressure $\Delta p_s(t)$ or from the volume/time profile of the differential volume for the qualitatively determined gas component.

8. Device for the analysis of gas components of a gas mixture, denoted below as matrix (12), for carrying out the method according to one of the preceding claims, having two sensors (1A, 1B, 1C ...) of a pair of sensors (1AB) which respectively comprise a cavity at least partially sealed by a membrane (2A, 2B, 2C, ...), and having a pressure measuring device for the time-dependent measurement of a differential pressure $\Delta p_s$ which is set up between the two cavities as a result of the permeation of gas components from the matrix (12) and purge gas through the two membranes (2A, 2B, 2C, ...), or having a volume measuring device for the time-dependent measurement of a differential volume which is set up between the two cavities as a result of the permeation of gas components from the matrix (12) and purge gas through the two membranes (2A, 2B, 2C, ...), **characterized in that** the sensors (1A, 1B, ...) or the two membranes (2A, 2B, 2C, ...) of the pair of sensors (1AB) are matched to one another regarding their geometry and selectivity in such a way that they have differing time profiles of the permeation for said gas components of the matrix (12).

9. Device according to Claim 8, **characterized in that** the sensors (1A, 1B, 1C ...) of the pair of sensors (1AB, 1CD, ...) or the membranes (2A, 2B, ...) thereof differ in their geometry.

10. Device according to Claim 8 or 9, **characterized in that** the membranes (2A, 2B, 2C, ...) of the pair of sensors (1AB) differ in their material.

11. Device according to one of Claims 8 to 10, **characterized in that** the sensors (1A, 1B) of the pair of sensors (1AB) are of tubular design and can be exposed to the matrix in such a way that their membranes (2A, 2B) are completely surrounded by the matrix (12).

12. Device according to one of Claims 8 to 11, **characterized in that** the device has a further pair of sensors (1AB) of the same design whose permeation properties differ from those of the first pair of sensors (1AB).

13. Device according to one of Claims 8 to 12, **characterized in that** the device has a pair of reference sensors (1CD) of the same design whose permeation properties correspond to those of the pair of sensors (1AB), having a pressure measuring device for the time-dependent measurement of a reference differential pressure $\Delta p_r$ which is set up between the two cavities of the pair of reference sensors (1CD) in the course of an analysis measurement, or having a volume measuring device for the time-dependent measurement of a reference differential volume which is set up between the two cavities of the pair of reference sensors (1CD) in the course of an analysis measurement.

14. Device according to one of Claims 8 to 13, **characterized in that** it includes a plurality of pairs of sensors and pairs of reference sensors which are respectively matched to one another in pairs regarding their permeation properties and their geometrical properties.

**Revendications**

1. Procédé pour analyser des composantes gazeuses d'un mélange gazeux, appelé ci-après matrice (12), avec deux capteurs (1A, 1B, 1C, ...) qui englobent respectivement un espace creux fermé par une membrane (2A, 2B, 2C, ...), les deux membranes (2A, 2B, 2C, ...) étant respectivement exposées d'un côté à la matrice (12) et avec leur autre côté à un gaz de rinçage, en définissant tout d'abord un état initial du système de mesure à un instant de départ $t_A$, auquel il se trouve dans un état d'équilibre diffusif, et en mesurant ensuite, à partir de l'instant de départ $t_A$, le tracé dans le temps de la pression différentielle $\Delta p_s$ qui s'établit entre les deux espaces creux en conséquence de la perméation de composantes gazeuses de la matrice (12) à travers les deux membranes (2A, 2B, 2C, ...), **caractérisé en ce que** les capteurs (1A, 1B, ...) ou les deux membranes (2A, 2B, 2C, ...) de la paire de capteurs (1AB) présentent des déroulements dans le temps différents de la perméation pour lesdites composantes gazeuses, **en ce qu'**un instant de fin $t_E$ est défini, auquel le pression différentielle mesurée correspond à la pression différentielle mesurée à l'instant de départ $t_A$, et **en ce que** ladite composante gazeuse ayant traversé est définie à partir de la différence de temps $\Delta t = t_E - t_A$.

2. Procédé selon la revendication 1, **caractérisé en ce que** la genèse de ladite composante gazeuse est définie à partir de la différence de temps $\Delta t = t_E - t_A$.

3. Procédé selon l'une des revendications précédentes, **caractérisé en ce qu'**une pression différentielle $\Delta p_s$ rapportée à une paire de capteurs de référence (1CD) est déterminée en déterminant une pression différentielle $\Delta p_{S1}$ de la paire de capteurs (1AB) et une pression différentielle $\Delta p_r$ de la paire de capteurs de référence (1CD) dont les membranes (2C, 2D) sont exposées des deux côtés au même gaz de rinçage et la pression différentielle $\Delta p_s$ est déterminée à partir de la différence entre $\Delta p_{s1}$ et $\Delta p_r$.

4. Procédé selon l'une des revendications précédentes, **caractérisé en ce que** le tracé dans le temps d'une pression différentielle de référence $\Delta p_r$, appelé ligne de base (20), est mesuré avec une paire de capteurs de référence (1CD) dont les membranes (2C, 2D) sont exposées des deux côtés au gaz de rinçage et l'instant de fin $t_E$ est déterminé comme étant le point d'intersection du tracé dans le temps de la pression différentielle $\Delta p_s$ avec la ligne de base (20).

5. Procédé selon l'une des revendications précédentes, **caractérisé en ce qu'**est établi soit un équilibre diffusif dynamique en effectuant un rinçage par le biais d'afflux de gaz de rinçage et d'évacuations de gaz de rinçage (3A, 3B, 3C, ..., 4A, 4B, 4C, ...) des capteurs (1A, 1B, 1C, ...), le gaz de rinçage étant un gaz de composition connue, soit un équilibre diffusif thermodynamique en effectuant un rinçage diffusif à travers la membrane (2A, 2B, 2C, ...), le gaz de rinçage étant le gaz de la matrice (12).

6. Procédé selon l'une des revendications précédentes, **caractérisé en ce qu'**au lieu de la pression différentielle $\Delta p$ est mesuré en fonction du temps le volume différentiel $\Delta V$ qui s'établit entre les deux espaces creux de la paire de capteurs (1AB) ou de la paire de capteurs de référence (1CD) en conséquence de la perméation de composantes gazeuses de la matrice (12) à travers les deux membranes (2A, 2B, 2C, ...).

7. Procédé selon l'une des revendications précédentes, **caractérisé en ce que** la concentration et/ou sa modification de la composante gazeuse définie qualitativement sont déterminées quantitativement à partir du tracé de la pression en fonction du temps de la pression différentielle $\Delta p_s(t)$ ou à partir du tracé du volume en fonction du temps du volume différentiel.

8. Dispositif pour analyser des composantes gazeuses d'un mélange gazeux, appelé ci-après matrice (12), destiné à mettre en oeuvre le procédé selon l'une des revendications précédentes, comprenant deux capteurs (1A, 1B, 1C, ...) d'une paire de capteurs (1AB) qui englobent respectivement un espace creux fermé au moins partiellement par une membrane (2A, 2B, 2C, ...), et comprenant un dispositif de mesure de pression pour la mesure en fonction du temps d'une pression différentielle $\Delta p_s$ qui s'établit entre les deux espaces creux en conséquence de la perméation de composantes gazeuses de la matrice (12) et du gaz de rinçage à travers les deux membranes (2A, 2B, 2C, ...) ou comprenant un dispositif de mesure de volume pour la mesure en fonction du temps d'un volume différentiel qui s'établit entre les deux espaces creux en conséquence de la perméation de composantes gazeuses de la matrice (12) et du gaz de rinçage à travers les deux membranes (2A, 2B, 2C, ...), **caractérisé en ce que** les capteurs (1A, 1B, ...) ou les deux membranes (2A, 2B, 2C, ...) de la paire de capteurs (1AB) sont accordés les uns aux autres au niveau de leur forme géométrique et de leur sélectivité de telle sorte qu'ils présentent des tracés dans le temps divergents de la perméation pour lesdites composantes gazeuses de la matrice (12).

9. Dispositif selon la revendication 8, **caractérisé en ce que** les capteurs (1A, 1B, 1C, ...) de la paire de capteurs (1AB, 1CD, ...) ou leurs membranes (2A, 2B, ...) se différencient au niveau de leur forme géométrique.

10. Dispositif selon la revendication 8 ou 9, **caractérisé en ce que** les membranes (2A, 2B, 2C, ...) de la paire de capteurs (1AB) se différencient au niveau de leur matière.

11. Dispositif selon l'une des revendications 8 à 10, **caractérisé en ce que** les capteurs (1A, 1B) de la paire de capteurs (1AB) sont réalisés en forme de tuyau et peuvent être exposés à la matrice de telle sorte que leurs membranes (2A, 2B) sont entièrement entourées par la matrice (12).

12. Dispositif selon l'une des revendications 8 à 11, **caractérisé en ce que** le dispositif présente une paire de capteurs (1AB) supplémentaire de construction identique dont les propriétés de perméation divergent de celles de la première paire de capteurs (1AB).

13. Dispositif selon l'une des revendications 8 à 12, **caractérisé en ce que** le dispositif présente une paire de capteurs de référence (1CD) de construction identique dont les propriétés de perméation correspondent à celles de la paire de capteurs (1AB), comprenant un dispositif de mesure de pression pour la mesure en fonction du temps d'une pression différentielle de référence $\Delta p_r$ qui s'établit entre les deux espaces creux de la paire de capteurs de référence (1CD) au cours d'une mesure d'analyse ou comprenant un dispositif de mesure de volume pour la mesure en fonction du temps d'un volume différentiel de référence qui s'établit entre les deux espaces creux de la paire de capteurs de référence (1CD) au cours d'une mesure d'analyse.

14. Dispositif selon l'une des revendications 8 à 13, **caractérisé en ce qu'**il contient une pluralité de paires de capteurs et de paires de capteurs de référence qui sont respectivement accordées les unes aux autres par paires au niveau de leurs propriétés de perméation et au niveau de leurs propriétés géométriques.

## FIG 1

## FIG 2

## FIG 3

## FIG 4

## IN DER BESCHREIBUNG AUFGEFÜHRTE DOKUMENTE

**In der Beschreibung aufgeführte Patentdokumente**

- DE 4316196 A1
- DE 19925842 A1
- DE 10220944 A1

**In der Beschreibung aufgeführte Nicht-Patentliteratur**

- **LAZIK et al.** *Sens. Actuators,* 2005, vol. A 117, 241-251